# EUROPÄISCHE PATENTSCHRIFT

(11) **EP 0 303 222 B1**
(45) Veröffentlichungstag und Bekanntmachung des Hinweises auf die Patenterteilung: **27.10.1993**
(21) Anmeldenummer: 88112902.7
(22) Anmeldetag: 08.08.1988
(51) Int. Cl.: G01N 27/02

(54) **Messwertaufnehmer für die induktive Leitfähigkeitsmessung in fluiden Messstoffen**
Measuring probe for measuring the conductivity of fluids inductively
Capteur pour la mesure inductive de la conductivité dans les fluides

(30) Priorität: 12.08.1987 DE 8711016 U
(43) Veröffentlichungstag der Anmeldung: 15.02.1989
(73) Patentinhaber: SIEMENS AKTIENGESELLSCHAFT, 80333 München (DE)
(72) Erfinder: Schmidt, Karl-Heinz, Dr., D-7505 Ettlingen 5 (DE); Seybicke, Günter, D-7500 Karlsruhe (DE); Thieme, Roland, D-6729 Wörth 2 (DE)

(56) Entgegenhaltungen:
- CH-A- 385 994
- DE-A- 3 320 995
- GB-A- 761 903
- US-A- 3 164 993
- US-A- 3 491 287
- US-A- 3 806 798
- US-A- 4 367 440

## Beschreibung

Die Erfindung bezieht sich auf einen Meßwertaufnehmer für die induktive Leitfähigkeitsmessung in fluiden Meßstoffen, bestehend aus zwei koaxial um eine zylindrische Durchflußöffnung für den Meßstoff und gegen diesen isoliert in einem Eintauchkörper aus Glas angeordneten Induktivitäten.

Die von einer Wechselstromquelle gespeiste erste Induktivität, z. B. in Form einer Ringkernspule, wirkt als Primärwicklung eines Transformators, dessen Sekundärwicklung die durch die Durchflußöffnung tretende Flüssigkeitsschleife des Meßstoffs ist; der in ihr fließende Strom ist der Leitfähigkeit proportional. Die zweite Induktivität ist als Sekundärwicklung eines zweiten Transformators zu betrachten, dessen Primärwicklung die Flüssigkeitsschleife ist und an dessen Ausgang das Meßsignal in Form eines leitfähigkeitsabhängigen Stromes abgenommen werden kann.
Der Eintauchkörper wie auch die Innenflächen der hohlzylindrisch ausgebildeten Durchflußöffnung bestehen bei bekannten Meßwertaufnehmern aus isolierendem Kunststoff, Glas oder Keramik, wie in der GB-A-761 903 oder US-A-3 3 164 993 erwähnt ist. Es hat sich herausgestellt, daß beim Einsatz von Eintauchkörpern aus Kunststoff bei hohen Temperaturen (über 100 °C) und/oder hochaggressiven Meßstoffen mit der Zeit Veränderungen des Kunststoffgefüges eintreten und der Meßstoff in das Gehäuse eindiffundieren kann. Bei Eintauchkörpern aus Glas oder Keramik treten technologische Schwierigkeiten und einengende Bedingungen bei der Herstellung und Formgebung auf.

Es besteht somit die Aufgabe, einen Meßwertaufnehmer der eingangs genannten Art so auszubilden, daß er relativ einfach herzustellen und je nach Bedarf in verschiedenen Einbaulagen in ruhendem oder strömendem Meßstoff verwendbar ist.

Eine Lösung der Aufgabe ist mit einem Meßwertaufnehmer gegeben, der die Merkmale des Anspruchs 1 aufweist.

Die Verwendung von Glas als Baustoff für alle mit dem Meßstoff in Berührung kommenden Teile des Meßwertaufnehmers bewirkt eine hohe Beständigkeit gegen Säuren und Laugen auch bei höheren Temperaturen. Der Eintauchkörper läßt sich aus handelsüblichem Glasrohrmaterial in einfacher Weise herstellen.
Die Ausbildung der Durchtrittsöffnung als abgebogenes Innenrohr sorgt beim Einbau des Meßwertaufnehmers in ein Durchlaufgefäß oder in eine Rohrleitung für eine gute Durchströmung, ebenso werden Ablagerungen im Leitungsweg verhindert.

Da die Leitfähigkeit der Meßstoffe in der Regel temperaturabhängig ist, wird für die Meßwertverarbeitung der jeweilige Wert der Meßstofftemperatur benötigt. Dazu läßt sich ein Meßelement, z. B. ein Widerstandsthermometer, an der Außenfläche des Innenrohrs anbringen, vorzugsweise im Bereich der Biegung, wodurch eine kurze Ansprechzeit bei Temperaturschwankungen erreicht wird.

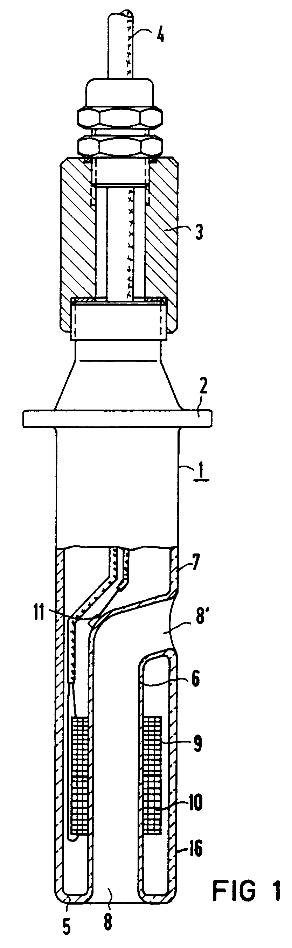

Zur Erläuterung der Erfindung sind in der Figuren 1 bis 3 ein Ausführungsbeispiel und zwei Einbauvarianten dargestellt und im folgenden beschrieben.

Figur 1: Der Eintauchkörper 1 des Meßwertaufnehmers besteht aus einem Außenrohr 16 aus Hartglas, welches an seinem oberen Ende mit einem Anbauflansch 2 oder einer anderen, der Befestigung dienenden Ausbildung und einer Leitungsdurchführung 3 für das zum meßwertverarbeitenden Gerät führende Kabel 4 versehen ist. In dem Außenrohr 16 ist ein Innenrohr 6 angeordnet, welches mit dem Ende 8 seines geraden, über etwa 3/4 seiner Länge koaxial verlaufenden unteren Abschnitts in der Stirnfläche 5 des Außenrohrs 16 mündet. Der obere Abschnitt des Innenrohrs 6 ist in etwa radialer Richtung abgebogen und mündet mit seinem Ende 8′ in der Mantelfläche 7 des Außenrohrs 16. Das gebogene Innenrohr 6 umschließt einen Teil der Flüssigkeitsschleife des Meßstoffs, die, wie eingangs beschrieben, als Sekundärwicklung für eine erste Induktivität 9 bzw. als Primärwicklung für eine zweite Induktivität 10 transformatorisch wirkt, wobei die Induktivitäten 9 und 10 als Ringkernspulen ausgeführt sind, die koaxial auf dem geraden Teil des Innenrohrs 6 angebracht sind.

Ein zur Berücksichtigung des Temperaturgangs des Meßstoffs benötigtes Temperaturmeßelement 11, z. B. ein Widerstandsthermometer, ist im Innern des Eintauchkörpers 1 an der Außenseite des Innenrohrs 6 im Bereich der Biegung angebracht.

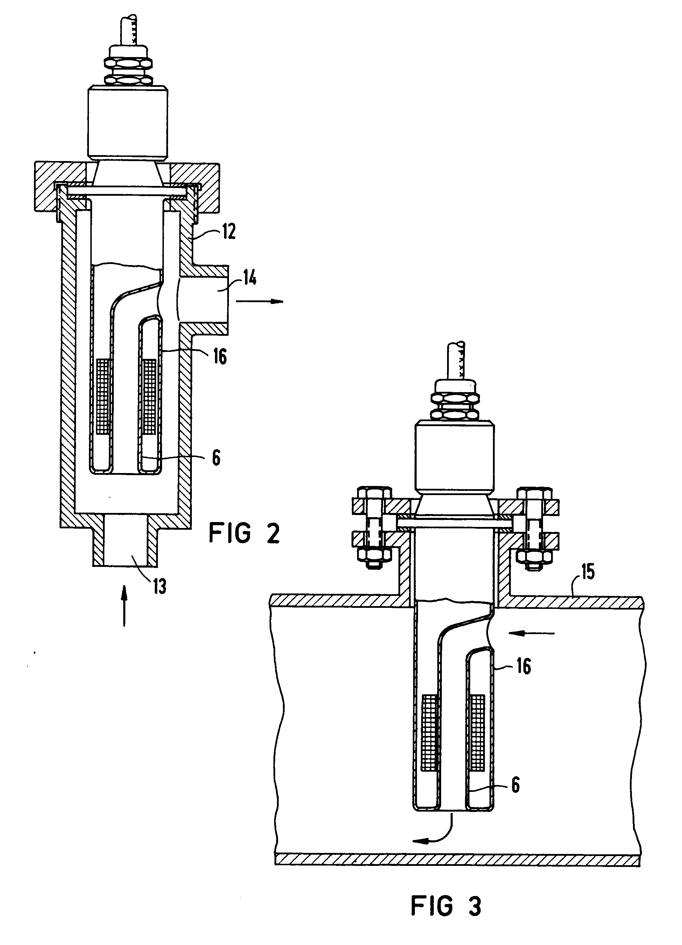

In den Figuren 2 und 3 sind zwei Anwendungsbeispiele für den Meßwertaufnehmer dargestellt.
In Figur 2 ist der Meßwertaufnehmer in ein Durchlaufgefäß 12 eingebaut, mit einem Einlaß 13 und einem Auslaß 14.
In Figur 3 ist der Meßwertaufnehmer in eine Rohrleitung 15 eingebaut.
Die Strömungsrichtung des Meßstoffs ist in beiden Ausführungsbeispielen durch Pfeile angedeutet. Man erkennt, daß bei der möglichen dünnwandigen Ausführung des gebogenen Innenrohrs 6 und der durch dieses erzielten Strömungsführung der Meßwertaufnehmer bei Konzentrationsschwankungen des Meßstoffs schnell anspricht, und daß den Meßeffekt beeinträchtigende Ablagerungen vermeidbar sind.

## Patentansprüche

1. Meßwertaufnehmer für die induktive Leitfähigkeitsmessung in fluiden Meßstoffen, bestehend aus zwei koaxial um eine zylindrische Durchflußöffnung für den Meßstoff und gegen diesen isoliert in einem Eintauchkörper aus Glas angeordneten Induktivitäten, **dadurch gekennzeichnet**, daß der Eintauchkörper (1) aus einem an seinem oberen Ende mit einem Anbauflansch (2) mit Leitungsdurchführung (3) versehenen Außenrohr (16) und einem, die Induktivitäten (9, 10) tragenden, gebogenen Innenrohr (6) besteht, welch letzteres als besagte, zylindrische Durchflußöffnung einerseits in der unteren Stirnfläche (5) des Außenrohrs (16), andererseits in dessen Mantelfläche (7) mündet.

2. Meßwertaufnehmer nach Anspruch 1, **dadurch gekennzeichnet,** daß das Innenrohr (6) einen sich über etwa 3/4 seiner Länge koaxial zum Außenrohr (16) erstreckenden geraden unteren und einen in etwa radialer Richtung gebogenen oberen Abschnitt aufweist.

3. Meßwertaufnehmer nach Anspruch 1 **dadurch gekennzeichnet,** daß ein eingebautes Meßelement (11) für die Temperatur des Meßstoffs an der Außenfläche des Innenrohrs (6) angeordnet ist.

4. Meßwertaufnehmer nach Anspruch 3, **dadurch gekennzeichnet,** daß das Meßelement (11) an der Biegung des Innenrohrs (6) angeordnet ist.

5. Meßwertaufnehmer nach Anspruch 2, **dadurch gekennzeichnet,** daß das Meßelement (11) ein Widerstandsthermometer ist.

6. Meßwertaufnehmer nach Anspruch 1, **dadurch gekennzeichnet,** daß der Eintauchkörper (1) mit seiner Achse quer zur Strömungsrichtung eines Meßstoffs in eine Leitung (15) eingebaut ist und daß die Mündung (8′) des Innenrohrs (6) in der Mantelfläche (7) des Außenrohrs (16) gegen die Strömung gerichtet ist.

7. Meßwertaufnehmer nach Anspruch 1, **dadurch gekennzeichnet,** daß der Eintauchkörper (1) mit seiner Achse in Strömungsrichtung in ein Durchlaufgefäß (12) eingebaut ist und die Mündung (8) des Innenrohrs (6) in der Stirnfläche (5) des Außenrohrs (16) gegen die Strömung gerichtet ist.

## Claims

1. Measuring sensor for the inductive measurement of conductivity in fluid measuring media, comprising two inductances arranged coaxially about a cylindrical flow opening for the measuring medium and insulated against the latter, in a glass immersion body, characterized in that the immersion body (1) comprises an outer pipe (16) provided at its upper end with a mounting flange (2) with cable bushing (3), and a bent inner pipe (6) carrying the inductances (9, 10), which inner pipe, as said cylindrical flow opening, opens on one side in the lower end surface (5) of the outer pipe (16), on the other side in the outer surface (7) thereof.

2. Measuring sensor according to claim 1, characterized in that the inner pipe (6) has a straight lower section extending over approximately 3/4 of its length coaxially to the outer pipe (16) and an upper section bent approximately in the radial direction.

3. Measuring sensor according to claim 1, characterized in that an installed measuring element (11) for the temperature of the measuring medium is arranged at the outer face of the inner pipe (6).

4. Measuring sensor according to claim 3, characterized in that the measuring element (11) is arranged at the bend of the inner pipe (6).

5. Measuring sensor according to claim 2, characterized in that the measuring element (11) is a resistance thermometer.

6. Measuring sensor according to claim 1, characterized in that the immersion body (1) is installed with its axis at right angles to the direction of flow of a measuring medium into a pipeline (15) and in that the opening (8') of the inner pipe (6) in the surface (7) of the outer pipe (16) is directed against the flow.

7. Measuring sensor according to claim 1, characterized in that the immersion body (1) is installed with its axis in the direction of flow into a flow chamber (12) and the opening (8) of the inner pipe (6) in the end surface (5) of the outer pipe (16) is directed against the flow.

## Revendications

1. Capteur pour la mesure par induction de la conductivité de fluides, constitué de deux inductances disposées dans un plongeur en verre, coaxialement autour d'une ouverture cylindrique de passage du fluide, et en étant isolées par rapport à celui-ci, caractérisé en ce que le plongeur (1) est constitué d'un tube extérieur (16), qui est muni à son extrémité supérieure d'une bride de montage (2), ayant un passage (3) pour un conducteur, et d'un tube intérieur (6) coudé portant les inductances (9,10) et qui, en tant que dit orifice cylindrique de passage, débouche d'une part dans la face frontale (5) inférieure du tube extérieur (16) et d'autre part, dans sa face (7) latérale.

2. Capteur suivant la revendication 1, caractérisé en ce que le tube intérieur (6) comporte une partie intérieure rectiligne s'étendant à peu près sur les trois quarts de sa longueur coaxialement au tube extérieur (16) et une partie supérieure coudée sensiblement en direction radiale.

3. Capteur suivant la revendication 1, caractérisé en ce que l'élément (11) incorporé de mesure de la température du fluide est disposé sur la face extérieure du tube intérieur (6).

4. Capteur suivant la revendication 3, caractérisé en ce que l'élément (11) de mesure est disposé au coude du tube intérieur (6).

5. Capteur suivant la revendication 2, caractérisé en ce que l'élément (11) de mesure est un thermomètre à résistance.

6. Capteur suivant la revendication 1, caractérisé en ce que le plongeur (1) est monté en ayant son axe transversal à la direction d'écoulement d'un fluide, dans un conduit (15), et en ce que l'embouchure (8) du tube intérieur (6) dans la face latérale (7) du tube extérieur (16) est dirigée dans le sens opposé à celui de l'écoulement.

7. Capteur suivant la revendication 1, caractérisé en ce que le plongeur (1) est monté en ayant son axe dans la direction de l'écoulement, dans un récipient (12) de passage, et l'embouchure (8) du tube intérieur (6) dans la face frontale (5) du tube extérieur (16) est dirigée dans le sens opposé à cet écoulement.
